# EUROPEAN PATENT APPLICATION

(11) **EP 0 629 858 A1**
(43) Date of publication of application: **21.12.1994**
(21) Application number: 93308368.5
(22) Date of filing: 20.10.1993
(51) Int. Cl.: G01N 35/02, B67B 7/02

(54) **Sample preparation apparatus**

(30) Priority: 16.06.1993 JP 168348/93; 08.09.1993 JP 246068/93
(71) Applicant: Kabushiki Kaisha Nittec, Koganei-shi Tokyo (JP)
(72) Inventor: Wakatake, Koichi, Koganei-shi Tokyo (JP)
(74) Representative: Piesold, Alexander J.

(57) **Abstract**

A fully automated prework station comprises: a first conveyor line (20) for carrying sampler containers (1) to an automatic centrifuge; an automatic centrifuge (30) located near a terminating end of the first conveyor line; a second conveyor line (40) for transporting the sampler containers that have undergone a centrifugal separation process in the centrifuge to a specimen extraction position; an automatic plug opening device (50) installed halfway in the second conveyor line; a specimen extraction and distributed delivery device (60) for drawing specimens from the sampler containers that were unplugged by the automatic plug opening device and then delivering and distributing each of the extracted specimens among other containers (6) each assigned with a specific inspection; and a control means (80) for controlling the devices in a coordinated way.

## Description

The present invention relates to sample preparation apparatus or a prework station for processing specimens of, for example, blood, before they are analysed.

In order to prevent blood infection accidents, to achieve a reduction in labor and to facilitate real time diagnosis, various experimental attempts have been made in recent years not only to enable automatic performance of analyses such as clinical biochemical and immunological analysis of blood, but also to permit automatic transfer of sampler containers containing blood to an automatic analyzing apparatus.

Conventional preprocessing of specimens currently requires the intervention of many people. The following are examples of the type of operations which are performed: feeding sampler containers such as sampler tubes containing sampled blood to a centrifuge where they are subjected to a centrifugal separation process; removing rubber plugs from the sampler containers that have undergone the centrifugal separation process; and drawing specimens from the unplugged sampler containers and distributing each of the extracted specimens among other sampler containers, each assigned for a specific type of analysis. In the centrifugal separation process, for example, the sampler containers are mostly processed in batches by a person handling individual sampler containers. The unplugging of containers is also done manually. The process of delivering and distributing the extracted specimen among different inspections is carried out mostly manually, although an automatic specimen extraction and distributed delivery apparatus is employed in parts of the process. In this way, a series of processes is interrupted by manual operations. While highly sophisticated techniques have already been introduced into inspection equipment and an information processing field, there is little improvement observed in automating the prework or preprocessing systems. Under these circumstances, improvements of the prework systems have been strongly called for.

According to a first aspect of the invention there is provided sample preparation apparatus comprising: a first conveyor for carrying sampler containers; a centrifuge arranged to receive the sampler containers from the first conveyor; a second conveyor for transporting the sampler containers that have undergone a centrifugal separation process in the centrifuge to a specimen extraction and delivery device; a plug opening device arranged adjacent to the second conveyor; the specimen extraction and delivery device being arranged to draw specimens from the sampler containers that have been plugged by the automatic plug opening device and then to deliver and distribute each of the extracted specimens among other containers for analysis; and a control means for controlling the devices in a coordinated way.

According to a second aspect of the invention there is provided a fully automated prework station, comprising a first conveyor line for carrying sampler containers to an automatic centrifuge; an automatic centrifuge located near a terminating end of the first conveyor line; a second conveyor line for transporting the sampler containers that have undergone a centrifugal separation process in the centrifuge to a specimen extraction position; an automatic plug opening device installed halfway in the second conveyor line; a specimen extraction and distributed delivery device for drawing specimens from the sampler containers that were unplugged by the automatic plug opening device and then delivering and distributing each of the extracted specimens among other containers each assigned with a specific inspection; and a control means for controlling the devices in a coordinated way.

Thus it will be seen that, at least in prefered embodiments, there is provided a fully automated prework station that can automatically perform, in a coordinated way, and without requiring human intervention, a series of operations or processes. These processes include: carrying the sampler containers and setting them in position in the centrifuge; unplugging the sampler containers that have undergone the centrifuging operation; transferring the unplugged sampler containers to the specimen extraction position; drawing specimens from the sampler containers that have arrived at the specimen extraction position; and delivering specified amounts of the specimens into subcontainers each assigned for a specific analysis or inspection.

A preferred embodiment of the invention will now be described, by way of example only and with reference to the accompanying drawings, in which:
Figure 1 is a perspective view showing the overall construction of a fully automated prework station according to one embodiment of this invention; and
Figure 2 is a plan view showing the schematic overall configuration of the fully automated prework station of Figure 1.

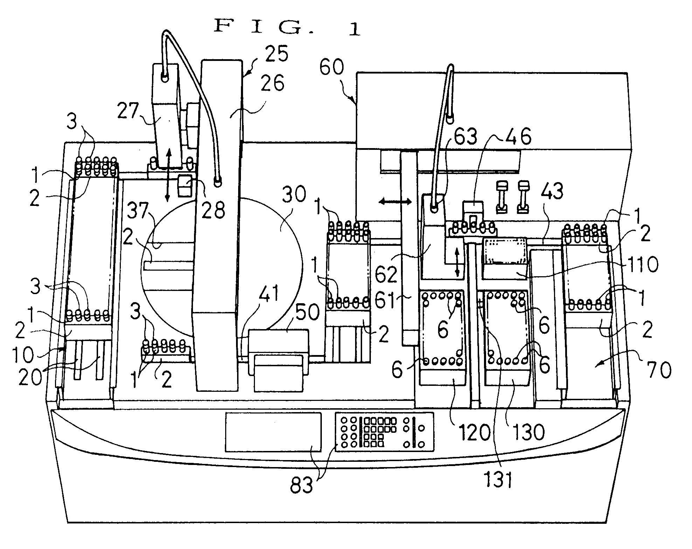

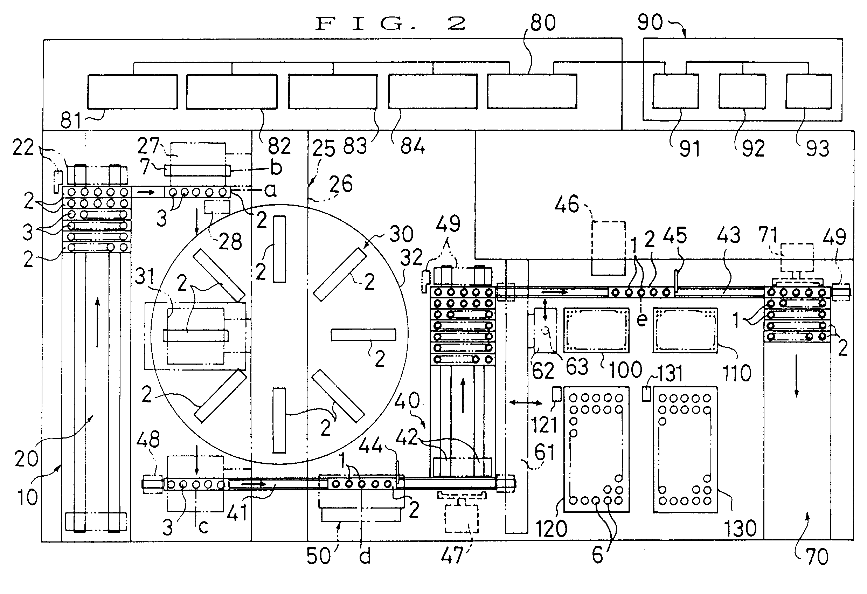

The fully automated prework station of this embodiment, as shown in Figure 1 and Figure 2, includes: specimen or sampler containers , containing sampled blood; racks 2 each accommodating a plurality of sampler containers J (in this case, five) in upright positions; a first conveyor line 20 that carries the sampler containers J held in the racks 2 from a sampler container stocker 10 to a pickup position a; an automatic centrifuge 30 installed near the terminating end of the first. conveyor line ***20***; a second conveyor line ***40*** that transports the sampler containers ***1*** that underwent the centrifugal separation process in the centrifuge ***30*** to an extraction position ***e***; an automatic plug opening device ***50*** installed on the second conveyor line ***40***; a specimen extraction and distributed delivery device ***60*** that draws a required portion of the sampled blood from the open container ***1*** and delivers the extracted blood specimen into subcontainers ***6*** for inspection; a processed container stocker ***70*** that stocks racks ***2*** holding the sampler containers ***1*** that have undergone the specimen extraction and distributed delivery process; and a controller ***80*** that controls these devices in a coordinated way. Reference numeral ***90*** represents an information input section.

The sampler container ***1*** is similar in construction to a known blood sampling tube U-shaped in cross section, with its upper opening sealed with a plastic sheet seal or rubber plug ***3***. The sampler container ***1*** has attached on its outer circumferential surface a bar code label (not shown) carrying information related to the sample blood, such as patient's name, registered identification number and sex, category of health insurance, insurance policy number, and the kind of inspection to be performed. A means for encoding these information into bar codes is well known and thus detailed explanation for the encoding means is omitted here.

The rack ***2*** is constructed to hold a plurality of sampler containers ***1*** (in the embodiment, five containers) in an upright attitude and is stuck on its outer surface with a bar code label (not shown) carrying a rack number. The rack number may be recorded by using such known means as a magnetic storage medium or a number of small holes through which light passes. The rack ***2*** with the sampler containers ***1*** erected therein is set in the sampler container stocker ***10***. The sampler container stocker ***10*** accommodates a row of racks ***2***, which are then fed intermittently to the pickup position ***a*** by the first conveyor line ***20***.

The first conveyor line ***20*** comprises a longitudinal feed device ***21*** having two parallelly arranged endless belts, a drive unit (not shown) that intermittently drives the longitudinal feed device ***21*** at constant intervals, a lateral feed device ***22*** installed at the terminating end of the longitudinal feed device ***21***, and a drive unit (not shown) that intermittently drives the lateral feed device ***22***. The pickup position ***a*** is located where the rack ***2*** carried over by the lateral feed device ***22*** stops. The longitudinal feed device ***21***, the lateral feed device ***22*** and their drive units may be formed by using an appropriate combination of a known endless belt intermittent drive mechanism and a rack intermittent feed mechanism using a timing belt. So their detailed explanation is not given here.

The rack ***2***, which has been transported to the pickup position ***a*** by the first conveyor line ***20*** in this way, is now set in the automatic centrifuge ***30*** by a pickup robot ***25***.

As shown in Figure 2, the pickup robot ***25*** consists of: a guide rail ***26*** laid parallel to the longitudinal feed device ***21*** of the first conveyor line ***20***; a clamper ***27*** arranged slidable along the longitudinal direction of the guide rail ***26*** and also vertically movable; and a drive unit (not shown) for driving the clamper ***2*****7**. The guide rail ***26*** is constructed in the similar manner to the known feed mechanism using-a timing belt. The clamper ***27*** is the same as the one used in a known pickup robot. So, detailed explanation for these members is not needed.

The pickup robot ***25*** with the above construction is controlled to clamp the rack ***2*** or dummy cassette ***7*** that was transferred to the pickup position ***a*** and install it onto a rotor (not shown) in the automatic centrifuge ***30*** through a window ***31*** formed in the centrifuge ***30***, or is controlled to take the centrifugalized rack ***2*** out of the rotor and onto the starting end ***c*** of the second conveyor line ***40***.

The dummy cassette ***7*** is used to maintain the rotating balance when the rack ***2*** is set on the rotor in the automatic centrifuge ***30***, and is arranged parallel to the pickup position ***a***. The dummy cassette ***7*** is transferred to a dummy cassette standby position ***b*** in synchronism with the transfer of the rack ***2*** by an automatic feeding device not shown.

At the pickup position ***a*** is installed a bar code reader ***28*** of a known construction which reads the identification number of a rack about to be subjected to the centrifugal separation processing.

The automatic centrifuge ***30*** has a transparent or translucent cover ***32*** enclosing the rotor and the rotor drive unit to prevent the accidental trapping of hand. Mounting and demounting of the rack ***2*** and the dummy cassette ***7*** to and from the centrifuge ***30*** by the pickup robot ***25*** is done through the window ***31*** formed in the cover ***32***. In other aspects, the construction and workings of the centrifuge in this embodiment are similar to those of a known batch processing type centrifuge, and thus its detailed explanation is omitted.

It is also possible to apply the Patent No. 1523287 (Japanese Patent Publication No. 10267/1989) filed by this inventor to this embodiment and construct the automatic centrifuge ***30*** so that it can perform the centrifugal separation continuously, thereby substantially reducing the standby time of the rack ***2***. The window ***31*** may be provided with a known shutter mechanism that opens and closes the window ***31*** in synchronism with the mounting and demounting of the rack ***2*** and dummy cassette ***7*** by the pickup robot ***25***.

The rack ***2*** (and therefore the sampler containers ***1*** containing sampled blood and held in the rack ***2***), which has undergone the centrifugalizing process in the automatic centrifuge ***30***, is transferred by the pickup robot ***25*** onto the starting end ***c*** of the second conveyor line ***40***. After this, the dummy cassette ***7*** is automatically removed by the pickup robot ***25*** from the rotor and returned onto the standby position ***b***.

The second conveyor line ***40*** includes: a lateral feed belt device ***41***; a longitudinal feed belt device ***42*** installed at the terminating end of the lateral feed belt device ***41***; and a specimen extraction lateral feed belt device ***43***. The rack ***2*** set at the starting end ***c*** of the lateral feed belt device ***41*** is moved to the terminating end of the belt device ***41***, from which it is transferred onto the longitudinal feed belt device ***42***. When the rack ***2*** reaches the terminating end of the longitudinal feed belt device ***42***, it is then transferred onto the specimen extraction lateral feed belt device ***43***, which feeds the rack to the specimen extraction position ***e*** set halfway in the belt device ***43***.

The second conveyor line ***40*** of the above construction has a plug opening position ***d*** set halfway in the lateral feed belt device ***41*** where a stopper ***44*** and an automatic plug opening device ***50*** are arranged. At the specimen extraction position ***e*** in the lateral feed belt device ***43***, a stopper ***45*** is installed and, on the immediate upstream side of the specimen extraction position ***e***, a bar code reader ***46*** is arranged to read the rack identification number.

The stopper ***44*** closes and opens the path of the lateral feed belt device ***41*** so that the rack ***2*** that has reached the plug opening position ***d*** is stopped there by the stopper ***44*** until the sampler containers in the rack ***2*** are removed of their rubber plugs ***3***.

The second stopper ***45*** also closes and opens the path of the specimen extraction lateral feed belt device ***43*** so that the rack ***2*** that has reached the specimen extraction position ***e*** is stopped there by the stopper ***45*** until the required portion of the blood in the sampler container ***1*** held in the rack ***2*** is drawn and delivered into subcontainers for inspection.

The longitudinal feed belt device ***42***, the lateral feed belt device **41**, the specimen extraction lateral feed belt device ***43*** and their drive units ***47***, ***48***, ***49*** may be formed in a way similar to that in which the first conveyor line ***20*** is formed, i.e. by properly combining a known endless belt drive mechanism and a rack intermittent feed mechanism using a timing belt. Thus the detailed description of the second conveyor line is omitted here. The bar code reader ***46*** also is of a known construction and thus its detail is not given here.

The automatic plug opening device ***50***, which is located at the position ***d*** in the lateral feed belt device ***41*** to remove the rubber plugs ***3*** from all of the sampler containers ***1*** held upright in the rack ***2***, may apply the known automatic plug opening mechanism disclosed by Japanese Patent Laid-Open No. 178394/1993 (Japanese Patent Application No. 361092/1991) filed by this applicant. Hence, its detailed description is omitted here.

The specimen extraction and distributed delivery device ***60*** comprises: a laterally movable rail ***61***; an arm ***62*** slidable along the longitudinal length of the rail ***61*** between the near and the far side thereof and also vertically movable; and a pipet device ***63*** mounted on the arm ***62***. The movement control mechanism for the rail ***61*** and the slide and lift control mechanism for the arm ***62*** are similar to those of a known X-Y feed mechanism, and hence their detailed description is omitted. Furthermore, the pipet device ***63*** is also similar in construction to the known pipet device found in common automatic analysis equipment. So, its detailed description is not necessary.

When the rack ***2*** arrives at the specimen extraction position ***e***, the specimen extraction and distributed delivery device ***60*** of the above construction moves the arm ***62*** to a position over a tip rack ***100*** or ***110*** and lowers it to fit an unused disposable tip over the free end of a pipet (not shown) of the pipet device ***63***.

Then, the arm ***62*** is lifted above the specimen extraction position ***e*** before being lowered to dip the free end of the pipet (i.e. disposable tip) into the blood serum in the sampler container ***1*** held upright in the rack ***2***. The pipet device ***63*** is activated to draw a required amount of serum and then lifted and moved over a magazine ***120***, ***130*** that holds a plurality of subcontainers ***6*** in upright condition.

When the arm ***62*** is moved to a predetermined position above the magazine ***120***, ***130***, it is lowered to insert the free end of the pipet (i.e. disposable tip) into the subcontainer ***6*** and deliver a specified amount of the extracted serum. The delivery of the extracted serum is carried out continuously for a plurality of subcontainers the number of which corresponds to that of the specified inspection items.

After the extraction and distributed delivery of blood serum is completed in this manner, the arm ***62*** is moved up to the original position where the disposable tip is removed and discarded while at the same time the interior of the pipet is cleaned by clean water supplied from a cleaning device (not shown) connected to the pipet device ***63***. This cleaning operation is performed before the above-mentioned specimen extraction and distributed delivery operation is repeated.

In this embodiment, 50 subcontainers ***6*** are accommodated, in upright position, in each of the two magazines ***120***, ***130***, with the magazine ***120*** dedicated for biochemical analysis and the magazine ***130*** for immunological analysis. These magazines may also be used in other way, for example, to meet the requirements of a customer. The number of the magazines may be changed according to the requirements.

By the side of the magazines ***120***, ***130*** are installed magazine readers ***121***, ***131*** which reads magazine identification numbers indicated in the form of bar codes. These magazine readers ***121***, ***131*** are of the same construction as the rack identification number reader and thus its detailed description is omitted here.

The processed container stocker ***70*** receives and stocks the racks ***2*** holding the sampler containers ***1*** that have undergone the specimen extraction and distributed delivery operation. That is, the racks ***2*** fed to the terminating end of the specimen extraction lateral feed belt device ***43*** are pushed and transferred one after another onto the processed container stocker ***70*** by the longitudinal feed device ***71***.

The controller ***80***, which incorporates a computer (CPU), controls the above-mentioned mechanisms in a coordinated way and checks the rack identification numbers read by the bar code readers ***28***, ***46*** against the magazine identification numbers read by the magazine readers ***121***, ***131*** to ensure that the specimen extraction and distributed delivery operation is correctly carried out. The controller ***80*** also monitors and controls the mounting condition of the racks ***2*** in the automatic centrifuge ***30*** as well as the duration of the centrifugal separation operation.

The controller ***80*** is connected with a power supply ***81***, a printer ***82***, a display (such as CRT) and keyboard ***83***, and an IC card reader ***84*** so that the management data about the state of the centrifugal separation operation and of the specimen extraction and distributed delivery operation being performed can be displayed in real time and printed out. The IC card reader ***84*** reads from an IC card (not shown) an identification number of a prework station operator and a program specifying the prework conditions, and loads the program into the controller ***80***. The prework station is controlled according to this program. The control conditions may also be entered directly from the keyboard ***83***.

It is possible to enter control requirements into the controller ***80*** from an information input unit ***90***, an external terminal for the controller, through a telephone line and also to monitor the result of the specimen extraction and distributed delivery operation as well as the operating state of the station. This makes it possible to check the cause of a trouble and direct the repair procedure without going to the installation site.

The information input unit ***90*** includes a computer (CPU) ***91***, a display (such as CRT) and keyboard ***92*** and a printer ***93***.

The preferred fully-automatic prework station described above is capable of performing, without requiring human interventions, a series of operations-a process of carrying and setting the sampler containers in the centrifuge, a process of unplugging the sampler containers that have undergone the centrifuging operation, a process of transferring the unplugged sampler containers to the specimen extraction position, and a process of drawing a specimen from the sampler containers that have arrived at the specimen extraction position and then delivering and distributing specified amounts of the specimens among subcontainers each assigned with a specific inspection. Among various advantages, the prework station can reliably prevent blood infection accidents. Further, since these processes can be coordinated and automatically controlled, they can be performed swiftly with no loss of time, thereby substantially reducing the time it takes to finish inspections.

## Claims

1. Sample preparation apparatus comprising: a first conveyor for carrying sampler containers; a centrifuge arranged to receive the sampler containers from the first conveyor; a second conveyor for transporting the sampler containers that have undergone a centrifugal separation process in the centrifuge to a specimen extraction and delivery device; a plug opening device arranged adjacent to the second conveyor; the specimen extraction and delivery device being arranged to draw specimens from the sampler containers that have been unplugged by the automatic plug opening device and then to deliver and distribute each of the extracted specimens among other containers for analysis; and a control means for controlling the devices in a coordinated way.

2. Sample preparation apparatus as claimed in claim 1, wherein the centrifuge is located near an end of the first conveyor.

3. Sample preparation apparatus as claimed in claim 1 or 2, wherein the plug opening device is located approximately halfway along the second conveyor.

4. Sample preparation apparatus as claimed in any preceding claim, wherein the control means comprises an electronic central processing unit.

5. Sample preparation apparatus as claimed in any preceding claim, comprising bar code reading means to read bar codes on the sampler containers.
